(19) Europäisches Patentamt / European Patent Office / Office européen des brevets

(11) **EP 3 043 161 B1**

(12) **EUROPÄISCHE PATENTSCHRIFT**

(45) Veröffentlichungstag und Bekanntmachung des Hinweises auf die Patenterteilung:
**18.03.2020  Patentblatt 2020/12**

(51) Int Cl.:
**G01K 13/00** (2006.01)     **G01K 11/32** (2006.01)

(21) Anmeldenummer: **15201195.3**

(22) Anmeldetag: **18.12.2015**

(54) **FASEROPTISCHES MESSSYSTEM UND -VERFAHREN BASIEREND AUF THERMORESPONSIVEN POLYMEREN**

OPTICAL FIBRE TEMPERATURE SENSING SYSTEM AND METHOD BASED ON THERMORESPONSIVE POLYMERS

SYSTÈME ET MÉTHODE DE MESURE DE TEMPERATURE FONCTIONNANT GRÂCE À UNE SONDE DE TEMPÉRATURE EN FIBRE OPTIQUE ET DES POLYMÈRES THERMOSENSIBLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2015   DE 102015100097**

(43) Veröffentlichungstag der Anmeldung:
**13.07.2016   Patentblatt 2016/28**

(73) Patentinhaber:
• **Bundesrepublik Deutschland, vertreten durch den
Bundesminister für Wirtschaft und Energie
12205 Berlin (DE)**
• **Fraunhofer Gesellschaft zur Förderung der angewandten Forschung e.V.
80686 München (DE)**

(72) Erfinder:
• **Schukar, Marcus
12681 Berlin (DE)**
• **Wischerhoff, Dr. Erik
14476 Potsdam-Golm (DE)**

(74) Vertreter: **Zimmermann & Partner
Patentanwälte mbB
Josephspitalstr. 15
80331 München (DE)**

(56) Entgegenhaltungen:
**US-A- 5 052 820     US-B2- 7 307 141**

• **JEAN-FRANÇOIS LUTZ ET AL: "Point by Point Comparison of Two Thermosensitive Polymers Exhibiting a Similar LCST: Is the Age of Poly(NIPAM) Over?", JOURNAL OF THE AMERICAN CHEMICAL SOCIETY, Bd. 128, Nr. 40, 16. September 2006 (2006-09-16), Seiten 13046-13047, XP055104521, ISSN: 0002-7863, DOI: 10.1021/ja065324n**
• **JEAN-FRANÇOIS LUTZ ET AL: "Preparation of Ideal PEG Analogues with a Tunable Thermosensitivity by Controlled Radical Copolymerization of 2-(2-Methoxyethoxy)ethyl Methacrylate and Oligo(ethylene glycol) Methacrylate", MACROMOLECULES, Bd. 39, Nr. 2, 21. Dezember 2005 (2005-12-21), Seiten 893-896, XP055125472, ISSN: 0024-9297, DOI: 10.1021/ma0517042**
• **Vladimir Aseyev ET AL: "Non-ionic Thermoresponsive Polymers in Water" In: "Bioactive Surfaces", 20. April 2010 (2010-04-20), Springer Berlin Heidelberg, Berlin, Heidelberg, XP055202649, ISSN: 0065-3195 ISBN: 978-3-64-220155-4 Bd. 242, Seiten 29-89, DOI: 10.1007/12_2010_57, * Structures 1-11.; Seite 52 - Seite 55; Tabelle 2 * * Structure 56.; Seite 65; Tabelle 3 ***

## Beschreibung

Die Erfindung liegt auf dem Gebiet der Temperaturmessung im Bereich der Medizintechnik, der Prozessmesstechnik und verwandter Gebiete. Sie betrifft insbesondere die permanente Temperaturerfassung an einer diskreten Messstelle und die Übertragung erfasster Messwerte unter extremen äußeren Messbedingungen, unter anderem bei starken elektromagnetischen Feldern. Die Erfindung betrifft Hersteller und Nutzer faseroptischer Messsysteme für die bzw. in den genannten Einsatzgebiete/n.

Eine zuverlässige Temperaturmessung und die Übertragung erhobener Daten in Echtzeit zu einer Leitstelle ist für viele Anwendungen von Bedeutung. Insbesondere gewinnt die Erfassung und permanente Überwachung der Körpertemperatur als wichtigem Vitalparameter bei Personen, die Arbeiten unter extremen Bedingungen durchführen oder dabei besonderen Risiken ausgesetzt sind (Feuerwehrleute, Personal in Kernkraftwerken, Bergwerken etc.) an Interesse. In vielen Fällen ist der Einsatz konventioneller elektrischer Temperatursensoren aufgrund bestimmter Umgebungsbedingungen, wie z.B. der Präsenz elektromagnetischer Felder, erschwert oder völlig unmöglich.

Die Druckschrift US 5 052 820 beschreibt ein faseroptisches Messsystem zur Messung einer Temperatur umfassend eine Lichtquelle, eine lichtleitende optische Faser, eine wässrige Lösung eines thermosensitiven Polymers in einem Behälter und einen optischen Detektor, wobei das thermosensitive Polymer ein Ethylen-Propylen-Dien-Monomer (EPDM) ist. Lutz J.-F. und Huth A. (2005) beschreiben in Macromolecules 39:839-896 die die temperaturabhängige Änderung des Streulichtsignals in einem P(MEO MA-co-OEGMA) Copolymer.

Vor diesem Hintergrund wird ein faseroptisches Messsystem nach Anspruch 1 und ein Temperaturmessverfahren nach Anspruch 17 vorgeschlagen. Weitere Ausführungsformen, Modifikationen und Verbesserungen ergeben sich anhand der folgenden Beschreibung und der beigefügten Ansprüche.

Mit dem erfindungsgemäßen Sensor kann die Körpertemperatur von Personen quasi in Echtzeit und ununterbrochen erfasst werden. Dabei ist durch eine Integration des Sensorsystems, beispielsweise in die Bekleidung, zugleich ein hoher Tragekomfort gewährleistet. Insbesondere bei Personen, die unter Extrembedingungen eingesetzt werden und dabei besonderen Risiken ausgesetzt sind, ist eine ständige Körpertemperaturüberwachung erstrebenswert. So werden z.B. Feuerwehrleute durch das Meßsystem nicht in ihrer Beweglichkeit eingeschränkt, was ein wesentliches Kriterium für die praktische Brauchbarkeit ihrer Ausrüstung darstellt. Im Medizinsektor spielt die Langzeitüberwachung der Körpertemperatur von Patienten eine wichtige Rolle, sowohl im stationären/klinischen Bereich als auch bei der Pflege im eigenen Heim. Auch hier ist die Körpertemperatur ein wichtiger Vitalparameter, der es in Kombination mit weiteren Parametern ermöglicht, kritische Situationen frühzeitig zu erkennen und rechtzeitig Gegenmaßnahmen zum Schutz der überwachten Person zu ergreifen.

Für die Temperaturmessung mit faseroptischen Sensoren gibt es derzeit mehrere Messmethoden, die auch in kommerziell erhältlicher Messtechnik eingesetzt werden. Sie sind im Folgenden einzeln erläutert.

Eine Variante beinhaltet als Sensorelement ein Faser-Bragg-Gitter (FBG). Dieses FBG wird dauerhaft in eine optische Faser eingeschrieben. An diesem Gitter wird Licht in einem schmalen Wellenlängenbereich reflektiert, wobei die Mittenwellenlänge als Bragg-Wellenlänge $\lambda_B$ bezeichnet wird und die eigentliche Messgröße darstellt. Das FBG kann mit einer Länge von einigen Millimetern als Punktsensor angesehen werden. Die Bragg-Wellenlänge ist temperaturabhängig, somit kann das FBG als Temperatursensor eingesetzt werden.

Weiterhin werden faseroptische Temperatursensoren eingesetzt, bei denen ein GaAs-Element als temperatursensitives Element verwendet wird. Das Halbleiterelement wird an das Ende einer optischen Faser angebracht und dient an dieser Stelle als Punktsensor. Der GaAs-Halbleiter hat eine temperaturabhängige Bandkante (GaAs wird ab ca. 850 nm lichtdurchlässig). Bei einer Temperaturänderung kommt es zu einer Verschiebung dieser Bandkante, die in der Regel spektral erfasst wird.

Ein weiteres Prinzip der Temperaturmessung basiert auf Fluoreszenz. Hierbei wird ein fluoreszierendes Material auf das Ende einer optischen Faser aufgebracht. Bei diesem Punktsensor wird das Material durch Licht angeregt, wobei die Abklingzeit des fluoreszierenden Materials gemessen wird. Diese Abklingzeit ist abhängig von der Temperatur, sodass bei zeitaufgelöster Erfassung des optischen Signals eine Temperatur am Punktsensor bestimmt werden kann.

Neben den bereits aufgeführten punktförmigen Sensoren gibt es eine weitere Methode, die der verteilten Temperaturmessung (DTS), bei der die optische Faser selbst als temperatursensitives Element genutzt wird. Unter Ausnutzung der Raman-Streuung in einer optischen Faser kann eine Temperaturmessung entlang der gesamten Faserstrecke durchgeführt werden. Bei der Raman-Spektroskopie wird die Raman-Streuung ortsaufgelöst erfasst, was eine verteilte Temperaturmessung entlang der optischen Faser ermöglicht.

Grundsätzlich ist bei der Körpertemperaturmessung im Falle einer Überwachung für die eingangs beschriebenen Personengruppen eine Temperaturauflösung bzw. Genauigkeit von ± 0,1 K erwünscht. Zugleich muss das Sensorelement flexibel am Körper platziert werden können, außerdem wird insbesondere beim mobilen Einsatz eine möglichst leichte, kleine und energieeffiziente Messtechnik benötigt.

Im Falle der Faser-Bragg-Gitter (FBG) ist das sensitive Element aufgrund des Herstellungsprozesses relativ teuer. Da üblicherweise eine spektrale Messung durchgeführt wird, stellt auch das Messgerät einen erheblichen Kostenfaktor dar. Bei präzisen - aber zugleich teuren - Messgeräten wird eine hohe spektrale Auflösung von bis zu 1 pm erreicht. Bei einer Temperaturempfindlichkeit des FBG von ca. 10 pm/K kann die Temperatur mit einer ausreichend hohen Auflösung gemessen werden. Der Nachteil liegt dabei - neben den Kosten - bei einem im Vergleich zu einfacheren FBG-Messgeräten höherem Gewicht und einer größeren Bauform. Kompaktere, leichtere und kostengünstigere Messgeräte sind auf dem Markt verfügbar, jedoch bieten diese Geräte eine nur unzureichende Auflösung, wodurch die zur Temperaturüberwachung im beschriebenen Einsatzgebiet erforderliche Auflösung nicht gewährleistet wird.

Im Falle des GaAs-basierten faseroptischen Temperatursensors wird bei heute erhältlichen Messgeräten häufig eine Messunsicherheit von ± 0,2 K angegeben. Die notwendige Genauigkeit wird somit nicht ganz erreicht. Einen bedeutenden Nachteil stellt hier wie auch beim FBG der Kostenfaktor dar. Das Messgerät erfasst üblicherweise das optische Spektrum, was eine verhältnismäßig teure Messtechnik bedingt. Weiterhin führt die Verwendung eines optischen Spektrometers zu einer relativ großen Bauform des Messgeräts.

Im Falle Fluoreszenz-basierter Messsysteme zur Temperaturmessung ist aufgrund der einfacheren Messmethode eine kostengünstigere Messtechnik verfügbar. Von Nachteil ist aber die übliche Messunsicherheit von ca. ± 0,5 K. Somit wird die hier erforderliche Genauigkeit nicht erreicht, weshalb das System für die hier beschriebenen Anwendungsfälle ungeeignet ist.

Im Falle der verteilten Temperaturmessung (DTS) mittels Raman-Spektroskopie ist die verfügbare Messtechnik teuer und hinsichtlich der Bauform zu groß und zu schwer für den mobilen Einsatz. Weiterhin wird bei der Raman-Sensorik heutzutage eine Ortsauflösung von etwa 1 m erreicht. Das ist für eine gezielte Temperaturmessung am Körper nicht geeignet. Außerdem liegt die Messunsicherheit bei ± 0,5 K, was ebenfalls nicht den Anforderungen genügt.

Im Patent US7307141 B2 wird ein thermoresponsiver Sensor beschrieben, der auf einer sich temperaturabhängig ändernden optischen Transparenz einer Polymerlösung basiert. Im Gegensatz zum hier vorgeschlagenen Messprinzip wird allerdings nur ein diskreter Temperaturschwellwert detektiert. Die Erfassung eines größeren Temperaturbereichs erfordert gemäß US7307141 B2 die Kombination mehrerer, räumlich voneinander getrennt angeordneten und bei verschieden Temperaturen ihre Transparenz ändernden Polymerlösungen. Ein Punktsensor kann somit nicht realisiert werden. Besonders nachteilig ist, dass es - wenn überhaupt - nur sehr umständlich möglich ist, einen größeren Temperaturbereich mit einer geringen Messunsicherheit abzudecken. Ebenso fehlt dem in US7307141 B2 beschriebenen Messsystem ein Referenzpfad, um mögliche parasitäre Dämpfungen in der optischen Faser zu kompensieren. Im Patent US5052820 werden thermisch refraktive Materialien für optische Sensoranwendungen beschrieben.

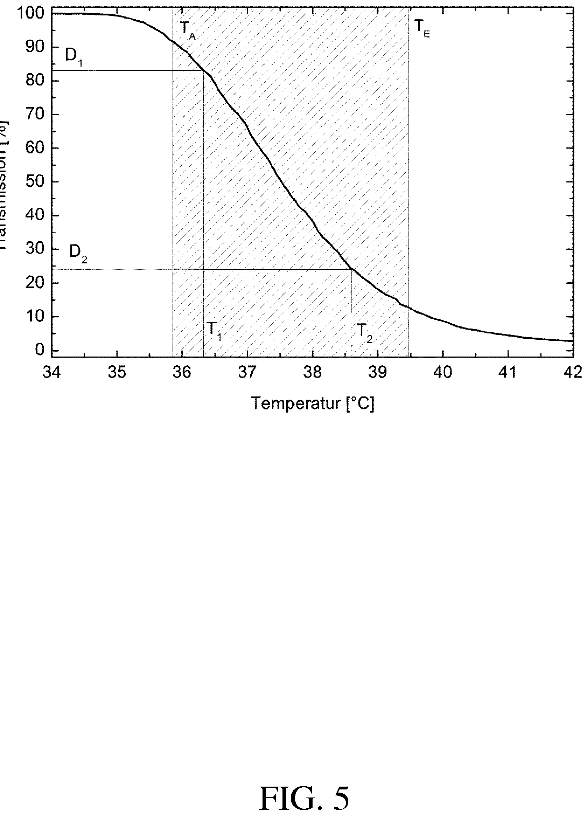

Überraschend erwies sich, dass über Trübungsmessungen an einem thermoresponsiven System nicht nur ein Temperaturschwellwert detektiert werden kann, sondern in einem definierten Temperaturbereich auch eine Temperaturmessung, d.h. die Bestimmung absoluter Temperaturwerte möglich ist. Durch eine geeignete Auswahl der thermoresponsiven Komponenten ist eine monotone Funktion der Transparenz in Abhängigkeit von der Temperatur des sensitiven Elements einstellbar. Bevorzugt werden dabei solche thermoresponsive Komponenten, deren Lösung eine geringe Hysterese zeigt. In wässrigen Medien sind dies vor allem Polymere, die Wasserstoffbrückenakzeptoren, aber keine Wasserstoffbrückendonoren aufweisen. Außerdem ist als thermoresponsive Komponente bevorzugt eine Stoffzusammensetzung bzw. eine Mischung aus einzelnen thermoresponsiven Polymeren mit jeweils diskreten unteren bzw. oberen kritischen Mischungstemperaturen vorgesehen. Das ermöglicht es, über die jeweilige Polymerzusammensetzung einen bestimmten als Arbeitsbereich geeigneten Temperaturbereich einzustellen, den jeweiligen Transparenzwert zu bestimmen und unmittelbar in einen Temperaturwert umzurechnen (vgl. Fig. 5).

Die in US7307141 B2 beschriebene Temperaturmessung umfasst lediglich den Vergleich zweier Zustände mit verschiedener Transparenz, um das Über- oder Unterschreiten eines bestimmten Temperaturschwellwertes zu erfassen. Im Gegensatz dazu wird gemäß der hier vorgeschlagenen Messanordnung die thermoresponsive Komponente als Sensorelement zur Erfassung der absoluten oder der relativen Temperatur innerhalb eines durch die Zusammensetzung der Polymerlösung (Stoffzusammensetzung / Polymermischung im Lösungsmittel oder im Lösungs- und Quellmittel oder im Quellmittel) festgelegten Temperaturbereichs eingesetzt. Das ermöglicht die Messung eines absoluten Temperaturwertes innerhalb eines definierten Bereichs. Das verbessert und erweitert die Einsetzbarkeit eines entsprechenden faseroptischen Messsystems beträchtlich. Bevorzugte Temperaturbereiche liegen im Bereich der physiologischen Körpertemperatur des Menschen, und reichen beispielsweise von 35 °C bis 42 °C, insbesondere von 36 °C bis 40 °C, beispielsweise von 36,5 °C bis 40 °C. Die vorstehend beschriebene Messanordnung weist in diesen Bereichen typischerweise eine Messgenauigkeit von ± 0,1 K auf.

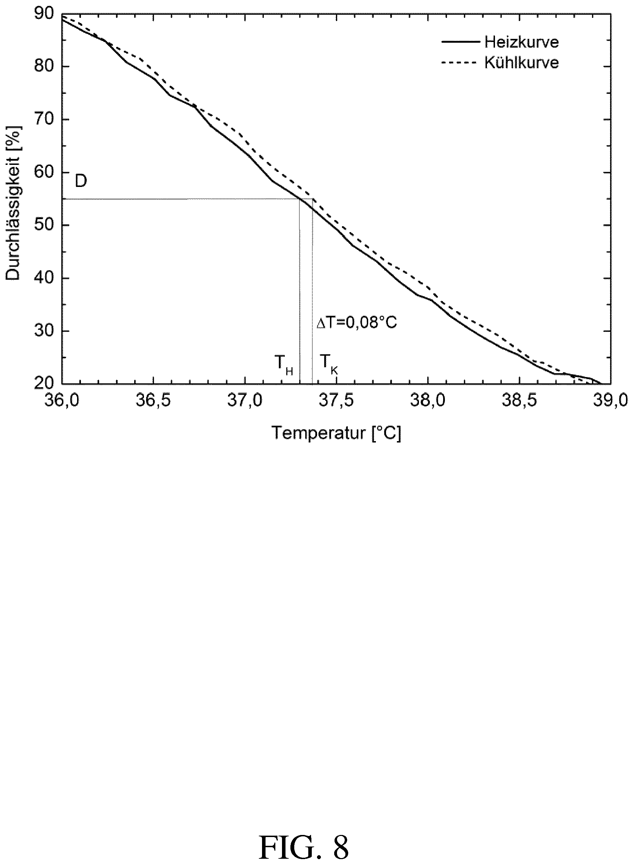

Die Messgenauigkeit von ± 0,1 K beruht auf der hohen Reproduzierbarkeit der Temperaturabhängigkeit der Trübung und auf der äußerst geringen Hysterese der Temperatur-Durchlässigkeitskurve (vgl. Fig. 8). Dies lässt sich beispielsweise mit Poly(Dialkylacrylamiden) als thermoresponsiven Komponenten in wässrigen Medien erreichen. Diese Polymere verfügen nur über Wasserstoffbrückenakzeptoren, nicht über Wasserstoffbrückendonoren. Im besonderen sind Poly(Diethylacrylamid-co-Dimethylacrylamid)e [Poly(DEAM-co-DMAM)] geeignete thermoresponsive Polymere, da durch eine Variation des Anteils an besser wasserlöslichen Dimethylacrylamid-Einheiten der Trübungsbereich über einen sehr weiten Temperaturbereich gezielt einstellbar ist.

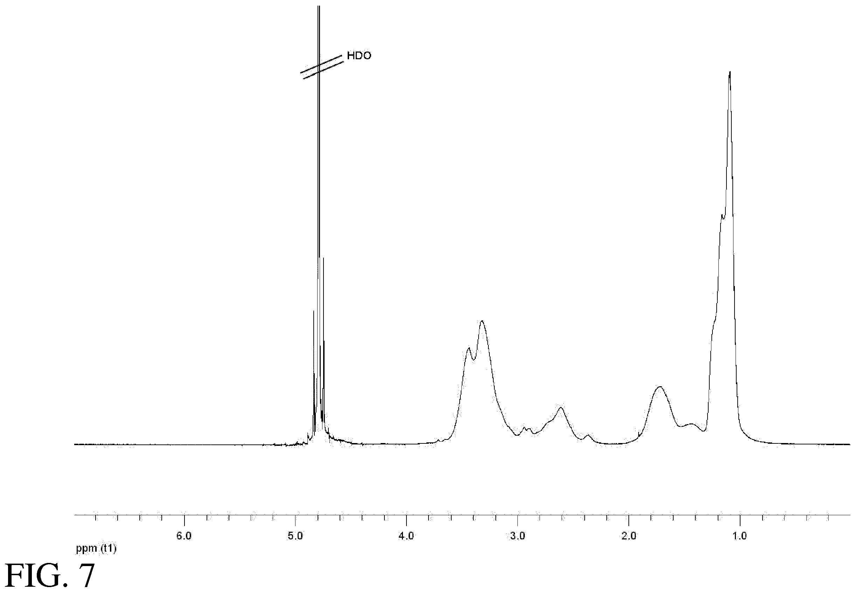

Gemäß einem praktischen Ausführungsbeispiel wurde ein Poly(DEAM-co-DMAM) mit einem Phasenübergang im physiologischen Temperaturbereich hergestellt. In einem 250 ml-Schlenkkolben wurden 5,00 g Diethylacrylamid (39,3 mmol), 0,21 g Dimethylacrylamid (2,1 mmol) und 0,35 g 2,2'-Azobis(2-Methylpropionamidin)-Dihydrochlorid (Wako V-50, 1,3 mmol) in einer Mischung aus 100 ml Ethanol und 20 ml $H_2O$ gelöst. Durch die Lösung wurde zur Entgasung über 20 min $N_2$ geleitet. Dann wurde der Kolben in einem Ölbad auf 65°C für 24 h erhitzt. Danach wurde die Reaktion durch Öffnen des Kolbens abgebrochen. Das Ethanol wurde am Rotationsverdampfer abgezogen. Die Reinigung des Polymers erfolgte durch viertägige Dialyse gegen Wasser (Schlauch Roth Zellu Trans, MWCO 4000-6000). Das Polymer wurde durch Gefriertrocknung isoliert. Die Ausbeute betrug 4,11 g (79%). Das $^1$H-NMR-Spektrum ($D_2O$) des Produkts ist in Fig. 7 gezeigt.

Die Ergebnisse der Trübungsmessung in Wasser (1,0 g·l$^{-1}$) bei 600 nm Wellenlänge mit einer Heizrate von 0,1 K·min$^{-1}$ sind in Fig. 5 dargestellt. Der Trübungspunkt (onset) liegt bei 35 °C. Eine wässrige Lösung des so hergestellten Polymeren weist bei einer Heizrate von 0,1 K·min$^{-1}$ lediglich eine geringe Hysterese auf, die in der Temperaturbestimmung zu einer Differenz von nur 0,08 K zwischen Heiz- und Kühlkurve führt (vgl. Fig. 8).

Die Trägheit des Meßsystems ist natürlich nicht nur durch die inhärenten Polymereigenschaften bestimmt, sondern auch durch die Wärmekapazität der Meßzelle und die Effektivität des Wärmeaustauschs zwischen der zu messenden Oberfläche und der Meßzelle. Deshalb sind Ausführungsformen mit einem im Vergleich zum Messobjekt kleinem Volumen V der Meßzelle (V < 10 mm$^3$) und einer großen Kontaktfläche mit der zu messenden Oberfläche bevorzugt. Daraus ergibt sich beispielsweise vorteilhaft eine abgeflachte Ausführungsform der Meßzelle. Aspektverhältnisse von 3 : 1 oder größer sind bevorzugt, wobei das Aspektverhältnis hier als Verhältnis Breite : Höhe ausgedrückt ist und wobei die breite Seite der Messzelle mit der zu messenden Oberfläche in formschlüssigen Kontakt gebracht wird.

Um die Wärmeleitung zum Meßmedium zu begünstigen, werden weiterhin für die Wände der Meßzelle Materialien mit einer hohen Wärmeleitfähigkeit bevorzugt, vor allem einem Wärmeleitfähigkeit, wie sie beispielsweise für Kupfer oder Silber typisch ist. Die Wandung der Messzelle kann beispielsweise aus Kupfer oder Messing ausgeführt sein, wobei die Oberflächen der Messzelle, beispielsweise galvanisch, vergütet sein können. Eine Oberflächenvergütung, beispielsweise mit einer Nickel-, einer Nickel-Phospor- oder einer Goldschicht sichert die Unterdrückung einer stets unerwünschten Korrosion unter Aufrechterhaltung der jeweils gewählten Oberflächenform. Die Oberflächenform ist hinsichtlich Geometrie und Rauhigkeit an die Oberfläche des Messobjektes angepasst. Der mittels Oberflächenvergütung erreichbare Korrosionsschutz gewährleistet die Aufrechterhaltung eines formschlüssigen Kontaktes der Messzelle zu der Oberfläche des Messobjektes.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

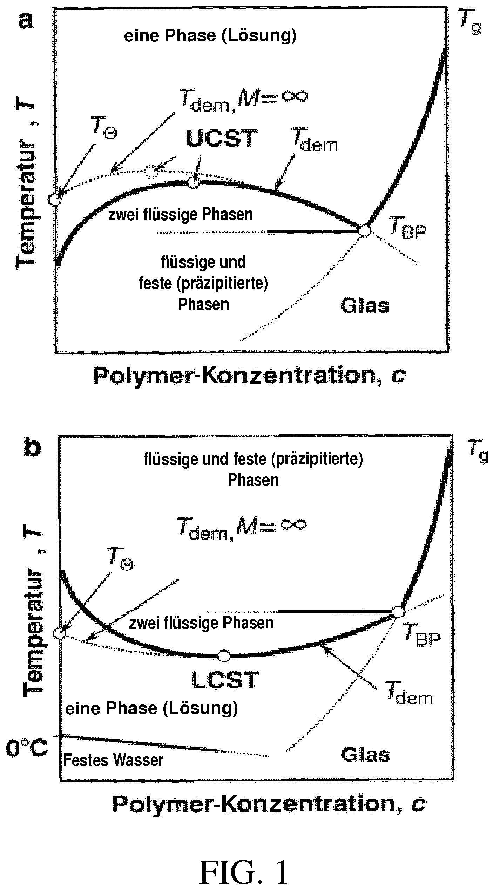

Fig. 1     zeigt im Teilbild (a) ein mögliches Phasendiagramm für Stoffzusammensetzungen mit einem Polymer, das eine obere kritische Lösungstemperatur (UCST) aufweist und im Teilbild (b) ein mögliches Phasendiagramm für Stoffzusammensetzungen mit einem Polymer, das eine untere kritische Lösungstemperatur (LCST) aufweist (Beide Grafiken stammen aus Aseyev, V.; Tenhu, H. Winnik F.M. (2011) "Non-ionic thermoresponsive Polymers in water". In "Self organized nanostructures of amphiphilic block copolymers II, (Müller A.H.; Borisov, O., Eds. Springer-Verlag Berlin: Berlin, 2011; Vol. 242, S.29-89, Text wurde angepasst.);

Fig. 2     zeigt ein faseroptisches Messsystem gemäß einer ersten Ausführungsform;

Fig. 3     zeigt ein faseroptisches Messsystem gemäß einer zweiten Ausführungsform;

Fig. 4     zeigt ein faseroptisches Messsystem gemäß einer dritten Ausführungsform;

Fig. 5     zeigt das Prinzip der erfindungsgemäßen Temperaturmessung;

Fig. 6     zeigt den Einfluss einer Hysterese auf die erfindungsgemäße Temperaturmessung;

Fig. 7     zeigt das $^1$H-NMR-Spektrum ($D_2O$) des gemäß Ausführungsbeispiel synthetisierten Poly(DEAM-co-DMAM);

Fig. 8     zeigt die erfindungsgemäße Temperaturmessung am Beispiel einer wässrigen Poly(DEAM-co-DMAM)-Lösung

Zur anschaulichen Begriffserläuterung sind in Fig. 1 schematisch Phasendiagramme für jeweils ein Polymer in einem Lösungsmittel dargestellt, wobei Fig. 1a ein Phasendiagramm eines Polymers mit einer oberen kritischen Lösungstemperatur (UCST) im betreffenden Lösungsmittel zeigt. Insbesondere kann das in Fig. 1a gezeigte Phasendiagramm z.B. als jenes von einem Polystyren in Cyclohexan verstanden werden. Das Teilbild 1b zeigt schematisch ein mögliches Phasendiagramm für ein Polymer das im gewählten Lösungsmittel (hier einem wässrigen Medium, beispielsweise PiPAAm (Poly(N-isopropylacrylamid) in Wasser) eine untere kritische Lösungstemperatur (LCST) aufweist.

Gemäß den vorstehend und nachfolgend vorgeschlagenen Ausführungsformen wird die Lösungstemperatur verallgemeinert als Mischungstemperatur aufgefasst und bezeichnet, da auch ein Quellen des thermoresponsiven Polymers im betreffenden Medium im erfindungsgemäßen Sinn verwendbar sind.

In Fig. 1 bezeichnen $T_{dem}$ - die Entmischungstemperatur (demixing), d.h. diejenige Temperatur bei der eine Entmischung stattfindet. $T_\theta$ bezeichnet die Theta-Temperatur, d.h. die Temperatur, bei der das Polymer eine ideal Gauss'sche Knäuel-Konformation aufweist und einander wiederholende Einheiten einfach als kettenförmig angeordnete nicht-interagierende Moleküle eines idealen Gases betrachtet werden können. $M$ ist die Stoffmengenkonzentration im Volumen der Lösung (Molarität); $T_{BP}$ - die Temperatur am Berghmans-Punkt (vgl. Arnauts, J.; Berghmans, H., (1987) "Amorphous thermoreversible gels of atactic polystyrene". Polymer Communications, vol. 28(3), 66-68) und $T_G$ - die Glasübergangstemperatur.

Somit werden die Begriffe "untere kritische Mischungstemperatur" und "obere kritische Mischungstemperatur" im fachüblichen Sinne verwendet, so wie sich das aus den Fign. 1a und 1b ergibt. Beispielsweise ist gemäß der Definition im "Kurzlehrbuch Physikalische Chemie" (4. Auflage von Peter W. Atkins und Julio de Paula, (c) 2008; Wiley-VCH Verlag GmbH & Co. KGaA, Weinheim, ISBN 978-3-527-31807-0) die obere kritische Mischungstemperatur die höchste Temperatur, bei der noch eine Phasentrennung auftreten kann. Die obere kritische Mischungstemperatur wird auch als obere kritische Lösungstemperatur bezeichnet. Oberhalb dieser Temperatur sind die beiden Komponenten vollständig miteinander mischbar und optisch transparent. Im vorliegenden Fall sind die Komponenten, beispielsweise ein thermoresponsive Polymer und ein verwendetes Lösungsmittel und/oder Quellmittel.

Dementsprechend tritt - wie in Fig. 1b dargestellt - unterhalb der unteren kritischen Mischungstemperatur (jedoch oberhalb des Gefrierpunktes der wässrigen Lösung) keine Phasentrennung mehr auf. Es sind Stoffzusammensetzungen bekannt, die eine untere kritische Mischungstemperatur aufweisen, ebenso sind Stoffzusammensetzungen bekannt, die eine obere kritische Mischungstemperatur aufweisen. Es sind weiterhin Stoffzusammensetzungen bekannt, die sowohl eine untere kritische Mischungstemperatur als auch eine obere kritische Mischungstemperatur aufweisen. Prinzipiell sind alle Stoffzusammensetzungen mit wenigstens einer kritischen Mischungstemperatur für die hier vorgeschlagene Verwendung zur optischen, insbesondere zur faseroptischen Temperaturmessung geeignet. Ihre Auswahl erfolgt so, dass im Wellenlängenbereich der in den Behälter eingestrahlten elektromagnetischen Strahlung ein Phasenübergang optisch als Übergang transparent/opak messbar ist, sodass ein Erreichen der unteren kritischen Mischungstemperatur und/oder der oberen kritischen Mischungstemperatur optisch erfassbar ist. Verfahren zur Bestimmung einer unteren kritischen Mischungstemperatur und/oder zur Bestimmung einer oberen kritischen Mischungstemperatur sind dem Fachmann bekannt. Beispielsweise kann die Messung turbidimetrisch (Trübungsmessung) in Analogie zur Methode, wie sie in Chytry, V.; Ulbrich, K., (2001) "Conjugate of Doxorubicin with a Thermosensitive Polymer Drug Carrier". Journal of Bioactive and Biocompatible Polymers, vol. 16(6), 427-440 vorgestellt wird, kalorimetrisch (Differentialthermoanalyse) wie in Fundueanu, G. et al. (2011) "Lower critical solution temperature versus volume phase transition temperature in thermoresponsive drug delivery systems", eXPRESS Polymer Letters, vol. 5(10), 839-848 beschrieben oder osmometrisch (Osmometrie) erfolgen.

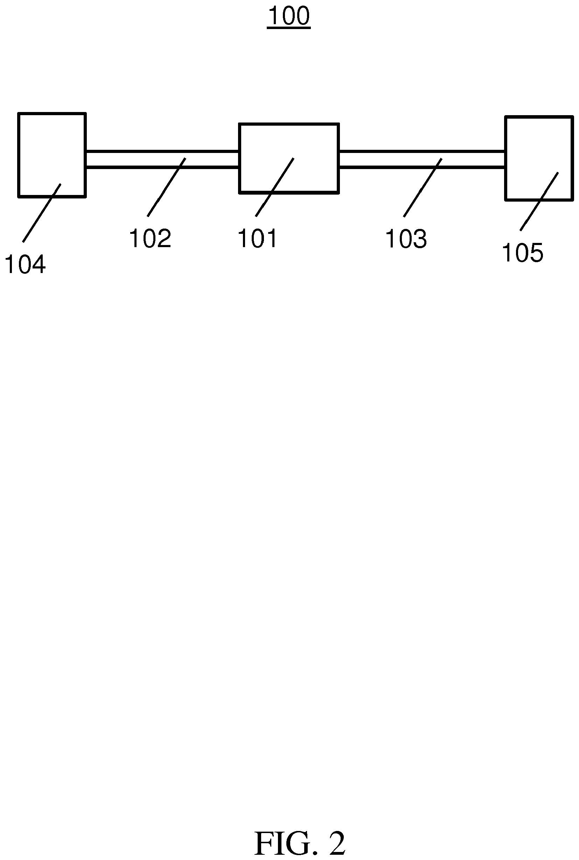

Die Fig. 2 zeigt ein faseroptisches Temperaturmesssystem 100, umfassend ein temperatursensitives Element 101, das mit lichtleitenden Fasern 102, 103 mit einem optischen Detektor 105 verbunden ist, wobei die Fasern 102, 103 Licht einer Lichtquelle 104 leiten.

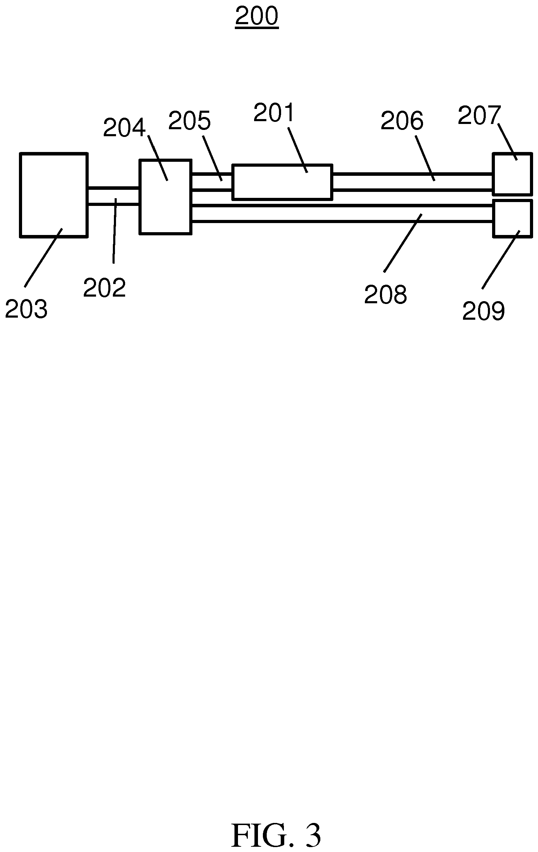

Fig. 3 zeigt ein um einen Referenzmesspfad 203-202-204-208-209 erweitertes faseroptisches Temperaturmesssystem 200. Der von der Lichtquelle 203 über die Faser 202 zum Kopplungselement 204 und den Faserabschnitt 208 zu einem zweiten optischen (Referenz-)Detektor 209 verlaufende Referenzmesspfad dient dazu, mögliche parasitäre Dämpfungen, die in der optischen Faser 205, 206 auftreten können, zu kompensieren. Der Referenzpfad sowie der das temperatursensitive Element 201 beinhaltende Messpfad liegen räumlich direkt nebeneinander und sind mechanisch miteinander verbunden, sodass äußere Einflüsse wie mechanische Belastungen oder Temperaturschwankungen auf beide Pfade gleichermaßen wirken. Als Kopplungselement 204 kommt ein faseroptischer Koppler, ein faseroptischer Multiplexer oder ein faseroptischer Schalter in Betracht.

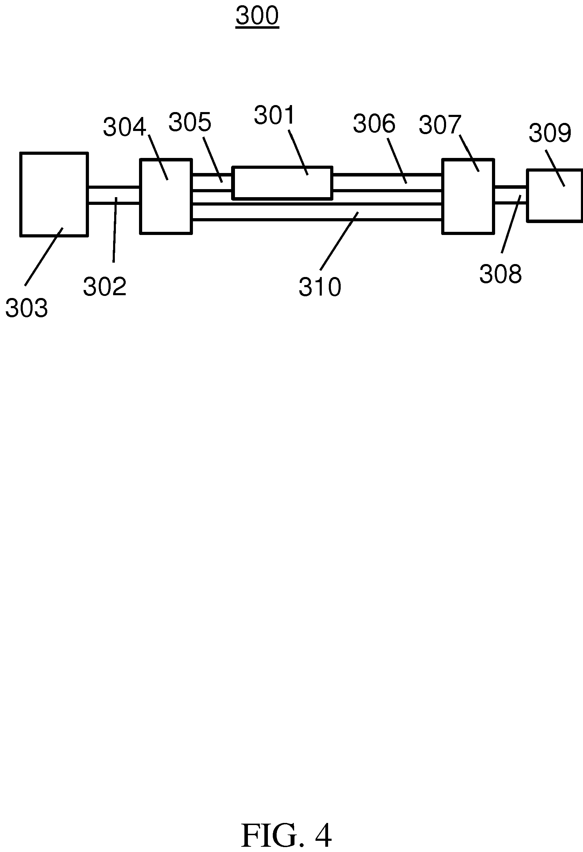

Fig. 4 zeigt das erweiterte faseroptische Temperaturmesssytem 300 mit einem weiteren Kopplungselement 307 im Referenzmesspfad 303-302-304-310-307-308-309. Der von der Lichtquelle 303 über die Faser 302 zum Kopplungselement 304 und die Faser 310 bis zum Kopplungselement 307 verlaufende Referenzmesspfad, der weiter über den Faserabschnitt 308 zum Detektor 309 führt, dient wie bei der zweiten Ausführungsform dazu, mögliche parasitäre Dämpfungen, die in der optischen Faser 305 bzw. 306 auftreten können, zu kompensieren. Auch hier müssen der Referenzpfad sowie der Messpfad räumlich direkt nebeneinander liegen, wobei beide Pfade mechanisch miteinander verbunden sind, sodass äußere Einflüsse wie mechanische Belastungen oder Temperaturschwankungen auf beide Pfade gleichermaßen wirken. Bei den Kopplungselementen 304 bzw. 307 ist zu beachten, dass maximal nur eines der beiden Elemente aus einem faseroptischen Koppler besteht, wobei das jeweils andere Element ein faseroptischer Schalter oder ein faseroptischer Multiplexer ist. Alternativ können auch beide Kopplungselemente 304 und 307 aus einem faseroptischen Schalter oder einem faseroptischen Multiplexer bestehen.

Fig. 5 zeigt das Prinzip der erfindungsgemäßen Temperaturmessung am Beispiel einer typischen von der Temperatur T abhängigen Durchlässigkeit (oder Transmission) D(T) einer thermoresponsiven Komponente. Die thermoresponsive Komponente durchläuft im Bereich zwischen den Temperaturen $T_A$ und $T_E$ einen streng monotonen Übergang von einem Zustand mit höherer optischer Durchlässigkeit $D_1$ zu einem Zustand mit geringerer optischer Durchlässigkeit $D_2$. In diesem Bereich (schraffiert unterlegt) ist jeder Wert der Durchlässigkeit D eineindeutig einer Temperatur T zugeordnet (z. B. die Durchlässigkeit $D_1$ der Temperatur $T_1$ und die Durchlässigkeit $D_2$ der Temperatur $T_2$). Die Messung der Durchlässigkeit D ermöglicht in diesem Bereich also eine Bestimmung der Temperatur T.

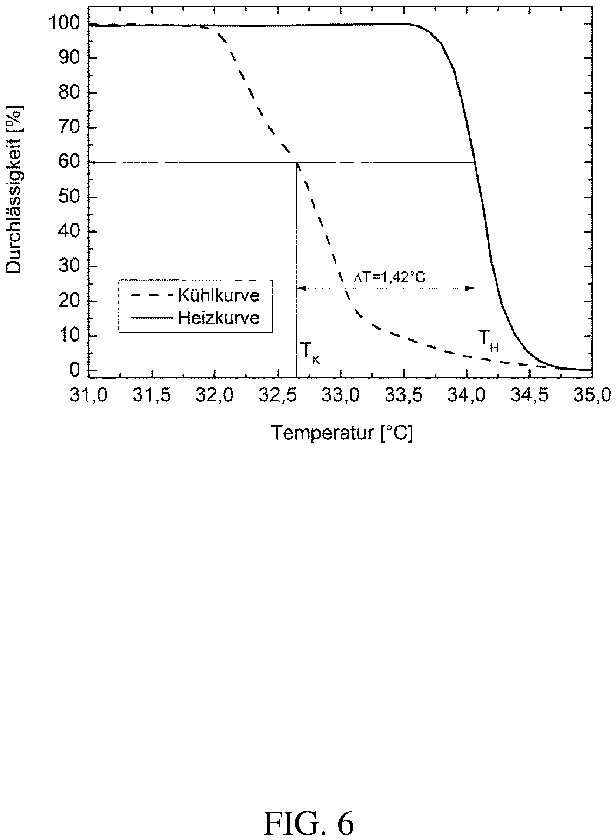

Fig. 6 veranschaulicht den Einfluss der Hysterese auf die Temperaturmessung mit einem erfindungsgemäßen Meßsystem. Sie zeigt die Auftragung der optischen Durchlässigkeit D gegen die Temperatur für eine wässrige Lösung von Poly(N-Isopropylacrylamid), wie in Lutz et al., J. Am. Chem. Soc. 128, 13046-13047 (2006) beschrieben. Hier handelt es sich um ein System, dessen thermoresponsive Komponente sowohl Wasserstoffbrückenakzeptoren als auch Wasserstoffbrückendonoren enthält, was zu einer ausgeprägten Hysterese des Systems beiträgt. Die beim Heizen der Probe gemessenen Durchlässigkeiten sind als durchgezogene Linie, die beim Kühlen gemessenen Werte als gestrichelte Linie dargestellt. Ein Wert von D ist einer Temperatur $T_H$ auf der Heizkurve und einer Temperatur $T_K$ auf der Kühlkurve zugeordnet. Durch die in diesem Beispiel sehr ausgeprägte Hysterese sind die Abweichungen zwischen Heiz- und Kühlkurve weitaus größer als sonstige Meßungenauigkeiten. Somit definiert in diesem Fall die Differenz zwischen $T_H$ und $T_K$ die maximal erreichbare Meßgenauigkeit.

Fig. 8 zeigt Heiz- und Kühlkurve einer wässrigen Lösung (1,0 g·1⁻¹) des gemäß dem oben beschriebenen Ausführungsbeispiel erhaltenen Poly(DEAM-co-DMAM) mit einem molaren Verhältnis von DEAM- zu DMAM-Einheiten von 95:5 bei einer Heizrate von 0,1 K·min⁻¹. Die durch die Hysterese bei der Temperaturbestimmung verursachte Abweichung zwischen $T_H$ und $T_K$ liegt bei 0,08 K und damit in einem für praktische Anwendungen der faseroptischen Temperaturmessung tolerablen Bereich.

Unter den eingangs beschriebenen Bedingungen können faseroptische Sensoren verwendet werden, da sie auch hier zuverlässig funktionieren.

Das sensitive Element beinhaltet eine Komponente, umfassend mindestens ein thermoresponsives Polymer, die innerhalb eines bestimmten Temperaturbereichs bei steigender Temperatur von einem optisch transparenten in einen optisch trüben (opaken) Zustand übergeht oder umgekehrt, aus einen optisch trüben Zustand in einen optisch transparenten Zustand wechselt. Die daraus resultierende Veränderung der optischen Dämpfung der Komponente wird messtechnisch erfasst. Dabei dient beispielsweise eine LED, ein Laser oder eine vergleichbare Lichtquelle zur Erzeugung von Licht. Dieses Licht wird in eine optische Faser eingekoppelt und über diese zu der temperaturresponsiven Komponente geführt. Das Licht durchstrahlt die Komponente und wird wiederum in eine weitere optische Faser eingekoppelt, die das Licht zu einem Detektor führt.

Bevorzugt handelt es sich bei der mindestens ein thermoresponsives Polymer umfassenden Komponente um eine Lösung eines thermoresponsiven Polymers oder um eine Lösung mehrerer thermoresponsiver Polymere. Alternativ können aber auch thermoresponsive Gele zum Einsatz kommen. Unter thermoresponsiven Gelen werden hier entweder Gele verstanden, bei denen die vernetzten Polymerketten, die das polymere Gerüst des Gels bilden, thermoresponsive Eigenschaften haben, oder solche Systeme, bei denen ein Gel, dessen vernetzte Struktur zumindest nicht notwendigerweise aus thermoresponsiven Einheiten aufgebaut ist, mit der Lösung mindestens eines thermoresponsiven Polymers gequollen ist. Besonders bevorzugt ist für die Komponente eine wässrige Lösung mehrerer Polymere, die in wässrigen Medien eine untere kritische Mischungstemperatur (LCST, engl.: lower critical solution temperature) aufweisen.

Wie auch aus Fig. 1 ersichtlich, wird dabei unter der unteren kritischen Mischungstemperatur diejenige Temperatur verstanden, unterhalb welcher das Polymer mit einem Lösungsmittel mischbar oder im Falle einer vernetzten Verbindung gequollen ist.

Dabei werden bevorzugt Polymere mit Phasenübergangstemperaturen gewählt, die gleichmäßig innerhalb eines Intervalls einer Anfangstemperatur $T_A$ bis zu einer Endtemperatur $T_E$ (vgl. Fig. 5) verteilt sind. Die Konzentrationen der Polymere sind bevorzugt so gering gewählt, dass ein einzelnes von n Polymeren die optische

Transparenz maximal um $\dfrac{100}{n}$ % absenkt.

Gemäß weiteren Ausführungsformen können auch Polymere mit einer oberen kritischen Mischungstemperatur (UCST, engl.: upper critical solution temperature) eingesetzt werden.

Wie bereits erläutert, wird dabei unter der oberen kritischen Mischungstemperatur diejenige Temperatur verstanden, oberhalb welcher das Polymer mit einem Lösungsmittel mischbar oder im Falle einer vernetzten Verbindung gequollen im Quellmittel ist.

Die hier gemachten Angaben beziehen sich auf einen im Wesentlichen konstanten Druck während der Temperaturmessung.

Gemäß bevorzugten Ausführungsformen kommen als entsprechende Komponenten typischer Ausführungsformen Polymere mit einer unteren kritischen Mischungstemperatur oder Polymere mit einer oberen kritischen Mischungstemperatur zum Einsatz.

Die Vorteile der vorgeschlagenen Ausführungsformen lassen sich wie folgt zusammenfassen.

Die Verwendung optischer Fasern zur Anbindung des zumeist kleinen und unauffälligen Sensorelements an das Messgerät ermöglicht die Platzierung des Sensors an der betreffenden Position, während das meist schwerere und voluminösere Gerät zur Messwerterfassung, Datenverarbeitung und -Weiterleitung an die Stelle verlegt werden kann, wo es am wenigsten stört. Somit kommt das Sensorelement ohne elektrische Komponenten aus. Das vorgeschlagene Messsystem kann so insbesondere im Bereich der Einwirkung elektromagnetischer Felder eingesetzt werden, wo elektrische Sensoren versagen. Die benötigte Messelektronik kann sich dabei entweder außerhalb des kritischen Bereiches befinden oder vor elektromagnetischen Feldern abgeschirmt werden, ohne die Sensorfunktion zu beeinflussen.

Das vorgeschlagene Sensorsystem kann bei angepasster Auslegung über die Erfassung der Körpertemperatur hinaus auch für die Temperaturüberwachung in zahlreichen anderen Fällen eingesetzt werden, beispielsweise bei Maschinen, Fahrzeugen, in Prozessen der chemischen Industrie, der Lebensmitteltechnologie, der Papier- und Textilindustrie, etc. Die Polymere sind hinsichtlich ihrer unteren bzw. oberen kritischen Mischungstemperatur an den zu erfassenden Temperaturbereich angepasst. Somit kann eine Polymermischung für das beschriebene Sensorelement beispielsweise an die Messung einer Hautoberflächentemperatur angepasst werden, die den bezeichneten Körpertemperaturen entspricht. Ebenso kann eine Temperatur eines für die industrielle Prozesstechnik relevanten Temperaturbereichs exakt erfasst werden.

Das vorgeschlagene Messprinzip ermöglicht die exakte und wenig aufwendige Temperaturmessung auf Basis faseroptischer Sensoren. Die Messanordnung ist robust und besonders für die kontinuierliche Erfassung der Körpertemperatur von Personen in den beschrieben schwierigen oder gefährlichen Umgebungen oder Situationen geeignet, ohne die Handlungsfreiheit der betreffenden Person zu stören oder einzuschränken.

Der vorgeschlagene faseroptische Temperatursensor zeichnet sich dadurch aus, dass alle zum Messsystem gehörenden elektronischen Komponenten innerhalb des Messgeräts angeordnet sind. Es werden also keine elektrischen Signale außerhalb des Messgeräts geführt. Dies ermöglicht den Einsatz des Messsystems in Umgebungen mit starken elektromagnetischen Feldern. Die Verwendung einer optischen Faser ermöglicht die flexible Verlegung und eine entsprechende Variabilität bei der Positionierung des Sensorelements.

Vorteilhaft ermöglicht die vergleichsweise einfache Elektronik die Realisierung eines leichten, kompakten und energieeffizienten Messgeräts. Damit ist das System prädestiniert für den mobilen Einsatz, beispielsweise bei Feuerwehrleuten oder im Bergbaubereich. Das vorgeschlagene Messprinzip erlaubt eine hohe Abtastrate des Messsignals und ermöglicht somit eine Messung quasi in Echtzeit. Bei der Verwendung eines optischen Referenzpfades können parasitäre Dämpfungen, die etwa durch starke (z.B. mechanische) Belastungen der optischen Faser entstehen, eliminiert werden. Das Sensorelement kann variabel gestaltet werden. Je nach Einsatzbereich können unterschiedlich angepasste Bauformen ausgeführt werden. Je nach Anwendungsfall ist es möglich, als thermoresponsives Element eine Polymerlösung oder ein immobilisiertes Gel einzusetzen. Damit wird die mögliche Variabilität des Designs des Sensorelements weiter gesteigert.

Durch die geeignete Kombination der Polymere in der thermoresponsiven Komponente ist eine gezielte Anpassung an bestimmte Temperaturbereiche möglich. Die Verwendung einfacher elektronischer und faseroptischer Komponenten ermöglicht eine sehr kostengünstige Herstellung und bietet somit sehr gute Absatzmöglichkeiten auf dem Markt.

**Patentansprüche**

1. Faseroptisches Messsystem (100, 200, 300) zur kontinuierlichen Erfassung eines Temperaturverlaufs und/oder einer Temperatur eines wasserbasierten Systems in einem Temperaturbereich von 5 bis 95 °C, umfassend:

    - ein temperatursensitives Element (101, 201, 301), umfassend eine Stoffzusammensetzung,

        wobei die Stoffzusammensetzung ein erstes thermoresponsives Polymer, zumindest ein zweites thermoresponsives Polymer und ein Lösungs- und/oder Quellmittel aufweist,

        wobei das erste thermoresponsives Polymer und das zumindest zweite thermoresponsive Polymer unterschiedliche untere kritische Mischungstemperaturen oder unterschiedliche obere kritische Mischungstemperaturen aufweisen,

        wobei die Stoffzusammensetzung angepasst ist, sodass sie bei einer Temperatur $T$ oberhalb einer Anfangstemperatur $T_A$ und unterhalb einer Endtemperatur $T_E$ einen monotonen Verlauf einer optischen Transparenz in Abhängigkeit von der Temperatur $T$ aufweist, sodass eine Messung der optischen Transparenz der Stoffzusammensetzung eine optische Bestimmung der Temperatur T erlaubt, wobei $T_E > T > T_A$,

wobei das Lösungs- und/oder Quellmittel Wasser ist,

wobei die thermoresponsiven Polymere ausgewählt sind unter Poly(Dialkylacrylamiden), Poly(Diethylacrylamid-co-Dimethylacrylamid)en [Poly(DEAM-co-DMAM] oder Poly(Methoxyethoxyethylmethacrylat-co-Oligoethylenglykolmethacrylat)en [Poly(MEO$_2$MA-co-OEGMA],

- mindestens eine lichtleitende optische Faser (102, 103, 202, 205, 206, 208, 302, 305, 306, 308, 310);
- eine Lichtquelle (104, 203, 303); und
- mindestens einen optischen Detektor (105, 207, 209, 309);

wobei das temperatursensitive Element (101, 201, 301) mit mindestens einer lichtleitenden optischen Faser (102, 103, 202, 205, 206, 208, 302, 305, 306, 308, 310) verbunden ist, sodass Licht der Lichtquelle (104, 203, 303) zum temperatursensitiven Element (101, 201, 301) und von dort zum optischen Detektor (105, 207, 209, 309) geführt werden kann, sodass eine durch die Stoffzusammensetzung veränderbare Transparenz des temperatursensitiven Elements (101, 201, 301) vom optischen Detektor (105, 207, 209, 309) detektierbar ist und einer Temperatur am temperatursensitiven Element (101, 201, 301) zuordenbar ist;

2. Faseroptisches Messsystem (100, 200, 300) nach Anspruch 1, wobei das temperatursensitive Element (101, 201, 301) einen Behälter umfasst, in dem die Stoffzusammensetzung angeordnet ist.

3. Faseroptisches Messsystem (100, 200, 300) nach Anspruch 2, wobei der Behälter einen metallischen Werkstoff umfasst.

4. Faseroptisches Messsystem (100, 200, 300) nach Anspruch 2 oder 3, wobei ein den Behälter passierendes optisches Signal temperaturabhängig gedämpft wird.

5. Faseroptisches Messsystem (100, 200, 300) nach Anspruch 4, wobei die Lichtquelle (104) ausgewählt ist unter:
einer LED, einer OLED, einem Laser, einer Glühlampe, einer Leuchtstofflampe oder einer Gasentladungslampe.

6. Faseroptisches Messsystem (100, 200, 300) nach einem der Ansprüche 1 bis 5, wobei das temperatursensitive Element mit dem Detektor (105) über eine lichtleitende optische Faser (103) verbunden ist.

7. Faseroptisches Messsystem (100, 200, 300) nach einem der Ansprüche 1 bis 6, wobei der optische Detektor (105) so angepasst ist, dass eine Veränderung einer Lichtleistung eines von der Lichtquelle ausgehenden und den Behälter passierenden Lichts detektierbar ist.

8. Faseroptisches Messsystem (100, 200, 300) nach Anspruch 7, wobei die detektierte und sich verändernde Lichtleistung einer im Behälter erfolgenden optischen Dämpfung entspricht.

9. Faseroptisches Messsystem (100, 200, 300) nach einem der vorstehenden Ansprüche, wobei das faseroptische Messsystem weiter umfasst:

- ein erstes faseroptisches Kopplungselement (204, 304),

wobei das erste faseroptische Kopplungselement (204, 304) durch mindestens eine optische Faser (202, 302) mit der Lichtquelle (203, 303) verbunden ist, und mindestens eine weitere optische Faser (205, 305) das erste faseroptische Kopplungselement mit dem thermosensitiven Element (201, 301) verbindet.

10. Faseroptisches Messsystem (100, 200, 300) nach Anspruch 9, wobei mindestens eine optische Faser (206) das thermosensitive Element (201) mit dem Detektor (207) verbindet.

11. Faseroptisches Messsystem (100, 200, 300) nach Anspruch 10, wobei mindestens eine optische Faser (208) das faseroptische Kopplungselement (204) mit einem Detektor (209) verbindet.

12. Faseroptisches Messsystem (100, 200, 300) nach Anspruch 11, wobei die optischen Fasern (205, 206, 208) parallel zueinander verlaufen und mechanisch sowie thermisch miteinander gekoppelt sind.

13. Faseroptisches Messsystem (100, 200, 300) nach Anspruch 12, wobei das faseroptische Messsystem ein zweites faseroptisches Kopplungselement (307) umfasst, und das zweite faseroptische Kopplungselement (307) mit dem thermosensitiven Element (301) und mit dem Detektor jeweils über mindestens eine optische Faser (306, 309) verbunden ist.

14. Faseroptisches Messsystem (100, 200, 300) nach Anspruch 13, wobei das erste und das zweite faseroptische Kopplungselement (307) unabhängig voneinander ausgewählt ist unter:
einem faseroptischen Koppler, einem faseroptischen Multiplexer und/oder einem faseroptischen Schalter.

**15.** Faseroptisches Messsystem (100, 200, 300) nach Anspruch 14, wobei das erste und das zweite faseroptische Kopplungselement (304, 307) über eine optische Faser (310) miteinander verbunden sind.

**16.** Faseroptisches Messsystem (100, 200, 300) nach Anspruch 15, wobei die optischen Fasern (305, 306, 310) parallel zueinander verlaufen und mechanisch sowie thermisch miteinander gekoppelt sind.

**17.** Temperaturmessverfahren zur kontinuierlichen Erfassung eines Temperaturverlaufs und/oder einer Temperatur eines wasserbasierten Systems in einem Temperaturbereich von 5 bis 95 °C, umfassend:

- Bereitstellen eines Behälters, umfassend eine Stoffzusammensetzung;
wobei die Stoffzusammensetzung ein erstes thermoresponsives, zumindest ein zweites thermoresponsives Polymer und ein Lösungs- und/oder Quellmittel aufweist,
wobei das erste thermoresponsives Polymer und das zumindest zweite thermoresponsive Polymer unterschiedliche untere kritische Mischungstemperaturen oder unterschiedliche obere kritische Mischungstemperaturen aufweisen,
wobei die Stoffzusammensetzung angepasst ist, sodass sie bei einer Temperatur T oberhalb einer Anfangstemperatur $T_A$ und unterhalb einer Endtemperatur $T_E$ einen monotonen Verlauf einer optischen Transparenz in Abhängigkeit von der Temperatur T aufweist, sodass eine Messung der optischen Transparenz der Stoffzusammensetzung eine optische Bestimmung der Temperatur T erlaubt, wobei $T_E > T > T_A$,
wobei das Lösungs- und/oder Quellmittel Wasser ist,
wobei die thermoresponsiven Polymere thermoresponsiven Polymere ausgewählt sind unter Poly(Dialkylacrylamiden), Poly(Diethylacrylamid-co-Dimethylacrylamid)en [Poly(DEAM-co-DMAM] oder Poly(Methoxyethoxyethylmethacrylat-co-Oligoethylenglykolmethacrylat)en [Poly(MEO$_2$MA-co-OEGMA];
- Bereitstellen einer Lichtquelle (104, 203, 303), eines optischen Detektors (105, 207, 209, 309) und von optischen Fasern (102, 103, 202, 205, 206, 208, 302, 305, 306, 308, 310);
- Einkoppeln von Licht der Lichtquelle (104, 203, 303) in den Behälter und den Detektor mit Hilfe der optischen Fasern, wobei von der Lichtquelle zum Detektor gelangendes Licht auf seinem Weg zum Detektor den Behälter zumindest teilweise passiert;
- Messen der optischen Leistung des Lichts, das die im Behälter befindliche Stoffzusammensetzung durchstrahlt hat;
- Zuordnen der am Detektor erfassten Lichtleistung zu einer Temperatur im Behälter und Feststellen eines Temperaturwertes am Behälter
- optionales Übertragen des festgestellten temperaturwertes an eine Kontroll- und Überwachungseinheit.

**18.** Temperaturmessverfahren nach Anspruch 17, wobei von der Lichtquelle ausgehendes Licht ohne den Behälter zu passieren zum Detektor geführt wird und als ein Referenzsignal zu einer Kompensation einer parasitären Dämpfung durch die optische Faser dient.

## Claims

**1.** A fiber-optic measurement system (100, 200, 300) for continuous detection of a temperature curve and/or of a temperature of a water-based system in a temperature range from 5 to 95°C, comprising:

- a temperature-sensitive element (101, 201, 301) comprising a substance composition,

the substance composition having a first thermoresponsive polymer, at least one second thermoresponsive polymer, and a solvent and/or a swelling agent,
the first thermoresponsive polymer and the at least second thermoresponsive polymer having different lower critical solution temperatures or different upper critical solution temperatures,
the substance composition being adapted so that at a temperature T above an initial temperature $T_A$ and below a final temperature $T_E$ its optical transparency has a monotonous course as a function of the temperature T, so that measurement of the optical transparency of the substance composition allows optical determination of the temperature T, when $T_E > T > T_A$,
the solvent and/or swelling agent being water,
the thermoresponsive polymer being selected from among poly(dialkylacrylamide)s, poly(diethylacrylamide-co-dimethylacrylamide)s [poly(DEAM-co-DMAM], or poly((methoxyethoxy)ethyl methacrylate-co-oligo(ethylene glycol) methacrylate)s [poly(MEO$_2$MA-co-OEGMA],

- at least one light-conducting optical fiber (102, 103, 202, 205, 206, 208, 302, 305, 306, 308, 310);

- a light source (104, 203, 303); and
- at least one optical detector (105, 207, 209, 309);

the temperature-sensitive element (101, 201, 301) being connected with at least one light-conducting optical fiber (102, 103, 202, 205, 206, 208, 302, 305, 306, 308, 310), so that light of the light source (104, 203, 303) can be guided to the temperature-sensitive element (101, 201, 301) and from there to the optical detector (105, 207, 209, 309), so that a transparency of the temperature-sensitive element (101, 201, 301), which can change due to the substance composition, can be detected by the optical detector (105, 207, 209, 309) and associated with a temperature on the temperature-sensitive element (101, 201, 301).

2. A fiber-optic measurement system (100, 200, 300) according to claim 1, wherein the temperature-sensitive element (101, 201, 301) comprises a container in which the substance composition is arranged.

3. A fiber-optic measurement system (100, 200, 300) according to claim 2, wherein the container comprises a metal material.

4. A fiber-optic measurement system (100, 200, 300) according to claim 2 or 3, wherein an optical signal passing through the container is damped as a function of temperature.

5. A fiber-optic measurement system (100, 200, 300) according to claim 4, wherein the light source (104) is selected from among:
an LED, an OLED, a laser, an incandescent bulb, a fluorescent lamp, or a gas-discharge lamp.

6. A fiber-optic measurement system (100, 200, 300) according to any one of claims 1 through 5, wherein the temperature-sensitive element is connected with the detector (105) via a light-conducting optical fiber (103).

7. A fiber-optic measurement system (100, 200, 300) according to any one of claims 1 through 6, wherein the optical detector (105) is adapted so that a change in light output of a light coming from the light source and passing through the container is detectable.

8. A fiber-optic measurement system (100, 200, 300) according to claim 7, wherein the detected and changing light output corresponds to an optical damping occurring in the container.

9. A fiber-optic measurement system (100, 200, 300) according to any one of the preceding claims, this fiber-optic measurement system further comprising:

- a first fiber-optic coupling element (204, 304),

the first fiber-optic coupling element (204, 304) being connected with the light source (203, 303) by at least one optical fiber (202, 302), and at least one other optical fiber (205, 305) connecting the first fiber-optic coupling element with the thermosensitive element (201, 301).

10. A fiber-optic measurement system (100, 200, 300) according to claim 9, wherein at least one optical fiber (206) connects the thermosensitive element (201) with the detector (207).

11. A fiber-optic measurement system (100, 200, 300) according to claim 10, wherein at least one optical fiber (208) connects the fiber-optic coupling element (204) with a detector (209).

12. A fiber-optic measurement system (100, 200, 300) according to claim 11, wherein the optical fibers (205, 206, 208) run parallel to one another and are mechanically and thermally coupled with one another.

13. A fiber-optic measurement system (100, 200, 300) according to claim 12, this fiber-optic measurement system comprising a second fiber-optic coupling element (307), and this second fiber-optic coupling element (307) being connected with the thermosensitive element (301) and with the detector, each of these connections being made via at least one optical fiber (306, 309).

14. A fiber-optic measurement system (100, 200, 300) according to claim 13, wherein the first and the second fiber-optic coupling element (307) are selected independently of one another from among the following:
a fiber-optic coupler, a fiber-optic multiplexer, and/or a fiber-optic switch.

15. A fiber-optic measurement system (100, 200, 300) according to claim 14, wherein the first and the second fiber-optic coupling elements (304, 307) are connected with one another via an optical fiber (310).

16. A fiber-optic measurement system (100, 200, 300) according to claim 15, wherein the optical fibers (305, 306, 310) run parallel to one another and are mechanically and thermally coupled with one another.

17. A temperature measurement process for continuous detection of a temperature curve and/or a temperature of a water-based system in a temperature range from 5 to 95°C, comprising:

- providing a container, comprising a substance composition;

the substance composition having a first thermoresponsive polymer, at least one second thermoresponsive polymer, and a solvent and/or swelling agent,

the first thermoresponsive polymer and the at least second thermoresponsive polymer having different lower critical solution temperatures or different upper critical solution temperatures,

the substance composition being adapted so that at a temperature $T$ above an initial temperature $T_A$ and below a final temperature $T_E$ its optical transparency has a monotonous course as a function of the temperature $T$, so that measurement of the optical transparency of the substance composition allows optical determination of the temperature $T$, when $T_E > T > T_A$,

the solvent and/or swelling agent being water,

the thermoresponsive polymers being selected from among poly(dialkylacrylamide)s, poly(diethylacrylamide-co-dimethylacrylamide)s [poly(DEAM-co-DMAM], or poly((methoxyethoxy)ethyl methacrylate-co-oligo(ethylene glycol) methacrylate)s [poly(MEO$_2$MA-co-OEGMA],

- providing a light source (104, 203, 303), an optical detector (105, 207, 209, 309), and optical fibers (102, 103, 202, 205, 206, 208, 302, 305, 306, 308, 310);

- coupling light of the light source (104, 203, 303) into the container and the detector using the optical fibers, at least some of the light traveling from the light source to the detector passing through the container on its way to the detector;

- measuring the optical output of the light that has passed through the substance composition located in the container;

- associating the light output detected at the detector with a temperature in the container and determining a temperature in the container;

- optionally, transferring the temperature value that has been determined to a control and monitoring unit.

18. A temperature measurement process according to claim 17, wherein light coming from the light source is guided to the detector without passing the container and acts as a reference signal to compensate parasitic damping by the optical fiber.


**Revendications**

1. Système de mesure à fibre optique (100, 200, 300) pour la détermination continue d'un profil de température et/ou d'une température d'un système à base d'eau dans une plage de températures de 5 à 95 °C, comprenant :

- un élément thermosensible (101, 201, 301), comprenant une composition de substances la composition de substances comprenant un premier polymère thermosensible, au moins un deuxième polymère thermosensible et un solvant et/ou un agent de gonflement,

le premier polymère thermosensible et l'au moins deuxième polymère thermosensible présentant des températures critiques inférieures de miscibilité différentes ou des températures critiques supérieures de miscibilité différentes,

la composition de substances étant conçue pour présenter, à une température $T$ supérieure à la température initiale $T_A$ et inférieure à la température finale $T_E$, une évolution monotone d'une transparence optique en fonction de la température $T$, de telle sorte qu'une mesure de la transparence optique de la composition de substances permette une détermination optique de la température $T$, avec $T_E > T > T_A$,

le solvant et/ou l'agent de gonflement étant l'eau,

le polymère thermosensible étant choisi parmi les poly(dialkylacrylamides), les poly(diéthylacrylamide-co-diméthylacrylamides) [poly(DAM-co-DMAM] ou les poly(méthacrylate de méthoxyéthoxyéthyle-co-méthacrylates d'oligoéthylèneglycol) [poly(MO$_2$MA-co-OEGMA],

- au moins une fibre optique photoconductrice (102, 103, 202, 205, 206, 208, 302, 305, 306, 308, 310) ;

- une source de lumière (104, 203, 303) ; et

- au moins un détecteur optique (105, 207, 209, 309) ;

l'élément thermosensible (101, 201, 301) étant relié à au moins une fibre optique photoconductrice (102, 103, 202, 205, 206, 208, 302, 305, 306, 308, 310), de façon que la lumière de la source de lumière (104, 203, 303) puisse être guidée vers l'élément thermosensible (101, 201, 301) et de là vers le détecteur optique (105, 207, 209, 309) de sorte qu'une transparence, pouvant être modifiée par la composition de substances, de l'élément thermosensible (101, 201, 301) puisse être détectée par le détecteur optique (105, 207, 209, 309), et qu'une température puisse être affectée au niveau de l'élément thermosensible (101, 201, 301).

2. Système de mesure à fibre optique (100, 200, 300) selon la revendication 1, dans lequel l'élément thermosensible (101, 201, 301) comprend un réservoir dans lequel est disposée la composition de substances.

3. Système de mesure à fibre optique (100, 200, 300) selon la revendication 2, dans lequel le réservoir comprend un matériau métallique.

**4.** Système de mesure à fibre optique (100, 200, 300) selon la revendication 2 ou 3, dans lequel un signal optique traversant le réservoir est amorti en fonction de la température.

**5.** Système de mesure à fibre optique (100, 200, 300) selon la revendication 4, dans lequel la source de lumière (104) est choisie parmi une LED, une OLED, un laser, une lampe à incandescence, une lampe fluorescente ou une lampe à décharge dans un gaz.

**6.** Système de mesure à fibre optique (100, 200, 300) selon l'une des revendications 1 à 5, dans lequel l'élément thermosensible est relié au détecteur (105) par l'intermédiaire d'une fibre optique photoconductrice (103).

**7.** Système de mesure à fibre optique (100, 200, 300) selon l'une des revendications 1 à 6, dans lequel le détecteur optique (105) est conçu de façon qu'une variation de la puissance lumineuse d'une lumière partant de la source de lumière et traversant le réservoir, puisse être détectée.

**8.** Système de mesure à fibre optique (100, 200, 300) selon la revendication 7, dans lequel la puissance lumineuse détectée et variable correspond à un amortissement optique se produisant dans le réservoir.

**9.** Système de mesure à fibre optique (100, 200, 300) selon l'une des revendications précédentes, le système de mesure à fibre optique comprenant en outre :

    - un premier élément de couplage à fibre optique (204, 304),

le premier élément de couplage à fibre optique (204, 304) étant relié par l'intermédiaire d'au moins une fibre optique (202, 302) à la source de lumière (203, 303), et au moins une fibre optique supplémentaire (205, 305) reliant le premier élément de couplage à fibre optique à l'élément thermosensible (201, 301).

**10.** Système de mesure à fibre optique (100, 200, 300) selon la revendication 9, dans lequel au moins une fibre optique (206) relie l'élément thermosensible (201) au détecteur (207).

**11.** Système de mesure à fibre optique (100, 200, 300) selon la revendication 10, dans lequel au moins une fibre optique (208) relie l'élément de couplage à fibre optique (204) à un détecteur (209).

**12.** Système de mesure à fibre optique (100, 200, 300) selon la revendication 11, dans lequel les fibres optiques (205, 206, 208) courent parallèlement les unes aux autres et sont tant mécaniquement que thermiquement couplées les unes aux autres.

**13.** Système de mesure à fibre optique (100, 200, 300) selon la revendication 12, le système de mesure à fibre optique comprenant un second élément de couplage à fibre optique (307), et le second élément de couplage à fibre optique (307) étant relié à l'élément thermosensible (301) et au détecteur, dans chaque cas par l'intermédiaire d'au moins une fibre optique (306, 309).

**14.** Système de mesure à fibre optique (100, 200, 300) selon la revendication 13, dans lequel le premier et le second éléments de couplage à fibre optique (307) sont choisis indépendamment l'un de l'autre parmi un coupleur à fibre optique, un multiplexeur à fibre optique et un commutateur à fibre optique.

**15.** Système de mesure à fibre optique (100, 200, 300) selon la revendication 14, dans lequel le premier et le second éléments de couplage à fibre optique (304, 307) sont reliés l'un à l'autre par une fibre optique (310).

**16.** Système de mesure à fibre optique (100, 200, 300) selon la revendication 15, dans lequel les fibres optiques (305, 306, 310) courent parallèlement les unes aux autres et sont couplées tant mécaniquement que thermiquement les unes aux autres.

**17.** Procédé de mesure de la température pour la détermination continue de l'évolution de la température et/ou d'une température d'un système à base d'eau dans une plage de températures de 5 à 95 °C, comprenant :

    - la fourniture d'un réservoir comprenant une composition de substances;
la composition de substances présentant un premier polymère thermosensible, au moins un deuxième polymère thermosensible et un solvant et/ou un agent de gonflement,
le premier polymère thermosensible et l'au moins deuxième polymère thermosensible présentant des températures critiques inférieures de miscibilité différentes ou des températures critiques supérieures de miscibilité différentes,
la composition de substances étant conçue pour présenter, à une température T supérieure à la température initiale $T_A$ et inférieure à la température finale $T_E$, une évolution monotone d'une transparence optique en fonction de la température T, de telle sorte qu'une mesure de la transparence optique de la composition de substances permette une détermination optique de la température T, avec $T_E > T > T_A$,
le solvant et/ou l'agent de gonflement étant l'eau,

le polymère thermosensible étant choisi parmi les poly(dialkylacrylamides), les poly(diéthylacrylamide-co-diméthylacrylamides) [poly(DAM-co-DMAM] ou les poly(méthacrylate de méthoxyéthoxyéthyle-co-méthacrylates d'oligoéthylèneglycol) [poly(MO$_2$MA-co-OEGMA],

- fourniture d'une source de lumière (104, 203, 303), d'un détecteur optique (105, 207, 209, 309) et de fibres optiques (102, 103, 202, 205, 206, 208, 302, 305, 306, 308, 310) ;

- injection de la lumière de la source de lumière (104, 203, 303) dans le réservoir et le détecteur à l'aide des fibres optiques, la lumière allant de la source de lumière au détecteur traversant au moins partiellement le réservoir sur son trajet allant vers le détecteur ;

- mesure de la puissance optique de la lumière qui a traversé la composition de substances se trouvant dans le réservoir ;

- affectation de la puissance lumineuse déterminée au niveau de détecteur à une température dans le réservoir, et détermination d'une valeur de la température dans le réservoir,

- en option, transfert de la valeur de la température telle que déterminée à une unité de commande et de surveillance.

18. Procédé de mesure de la température selon la revendication 17, dans lequel la lumière sortant de la source de lumière est guidée vers le détecteur sans traverser le réservoir, et sert de signal de référence à une compensation d'un amortissement parasite par la fibre optique.

FIG. 1

100

104    102    101    103    105

FIG. 2

FIG. 3

300

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5052820 A
- US 7307141 B2

**In der Beschreibung aufgeführte Nicht-Patentliteratur**

- **LUTZ J.-F. ; HUTH A.** *Macromolecules,* 2005, vol. 39, 839-896
- Non-ionic thermoresponsive Polymers in water. **ASEYEV, V. ; TENHU, H. ; WINNIK F.M.** Self organized nanostructures of amphiphilic block copolymers II. Springer-Verlag, 2011, vol. 242, 29-89
- **ARNAUTS, J. ; BERGHMANS, H.** Amorphous thermoreversible gels of atactic polystyrene. *Polymer Communications,* 1987, vol. 28 (3), 66-68
- **PETER W. ATKINS ; JULIO DE PAULA.** Kurzlehrbuch Physikalische Chemie. Wiley-VCH Verlag GmbH & Co. KGaA, 2008
- **CHYTRY, V. ; ULBRICH, K.** Conjugate of Doxorubicin with a Thermosensitive Polymer Drug Carrier. *Journal of Bioactive and Biocompatible Polymers,* 2001, vol. 16 (6), 427-440
- **FUNDUEANU, G. et al.** Lower critical solution temperature versus volume phase transition temperature in thermoresponsive drug delivery systems. *eXPRESS Polymer Letters,* 2011, vol. 5 (10), 839-848
- **LUTZ et al.** *J. Am. Chem. Soc.,* 2006, vol. 128, 13046-13047